# EUROPEAN PATENT APPLICATION

(11) **EP 0 865 940 A2**
(43) Date of publication of application: **23.09.1998**
(21) Application number: 98302005.8
(22) Date of filing: 17.03.1998
(51) Int. Cl.: B60B 3/16, B60B 7/00

(54) **Vehicle wheels**

(30) Priority: 18.03.1997 GB 9705517
(71) Applicant: Trevor, Alan Jones, Walsall, West Midlands, WS3 2NE (GB); Perks, Timothy James as Executor of John Perry (deceased), Aldridge, Walsall, West Midlands WS9 8LZ (GB); Jennings, Stephen Paul, as Executor of John Perry (deceased), Aldridge, Walsall, West Midlands WS9 8LZ (GB)
(72) Inventor: Trevor, Alan Jones, Walsall, West Midlands, WS3 2NE (GB); Perks, Timothy James as Executor of John Perry (deceased), Aldridge, Walsall, West Midlands WS9 8LZ (GB); Jennings, Stephen Paul, as Executor of John Perry (deceased), Aldridge, Walsall, West Midlands WS9 8LZ (GB)
(74) Representative: Swindell & Pearson

(57) **Abstract**

A safety arrangement 10 for use with a conventional vehicle wheel system 12. This comprises a hub 14, a ring of bolts 16 on the hub 14, a wheel 18 having apertures for location over each bolt 16, and a wheel nut 20 on each bolt 16 and tightened to hold the wheel 18 against the hub 14. According to the invention, the arrangement further comprises a retaining ring 22 and mounting means 24 incorporating hooks 26 to mount the retaining ring 22 to the vehicle wheel system 12. The retaining ring 22 is positioned to interfere with rotation of the wheel nuts 20, so as to resist or prevent loosening of the nuts.

## Description

The present invention relates to vehicle wheels and in particular, but not exclusively, to safety aspects thereof.

Road vehicles commonly use a vehicle wheel system which comprises a hub on the vehicle and a wheel which is retained on the hub by wheel nuts. Short stub bolts are carried by the hub, and openings in the wheels are fitted over these bolts, the wheel nuts then being threaded on to the bolts to secure the wheel in place.

Unfortunately, wheel nuts are prone to work loose during use, which can result in wheel nuts being thrown from a vehicle travelling at high speed. This is extremely dangerous, but an even greater danger arises if wheel nuts work loose sufficiently to allow the wheel to break free from the hub while the vehicle is moving. Fatalities occur each year as a result of vehicle wheels coming off in this way.

The problem is particularly serious in relation to commercial vehicles. These are generally larger and heavier than domestic vehicles, particularly when loaded, and thus may have a larger number of wheels, each with ten or more wheel nuts, so that the operation of checking that wheel nuts are tight is time-consuming and therefore often overlooked.

The present invention seeks to address these difficulties.

According to the invention, there is provided a safety arrangement for a vehicle wheel system which comprises a hub, at least one bolt on the hub, and a wheel nut engageable with the or each bolt to retain a wheel on the hub, the safety arrangement comprising retaining means, and mounting means operable to mount the retaining means to a vehicle wheel system as aforesaid, to so position the retaining means as to interfere with rotation of the wheel nuts and thereby resist or prevent loosening of the nuts.

The retaining means may comprise a recess which, in use, mates with the or each nut to prevent the nut turning relative to the retaining means. The retaining means may comprise a collar which is located, in use, around a nut. The arrangement preferably comprises a plurality of collars for respective nuts.

The arrangement may comprise an intermediate member, the mounting means being operable to mount the intermediate member at a position fixed relative to the wheel, and there being engagement means associated with the or each nut to prevent turning relative to the intermediate member. The engagement means may provide engagement between the intermediate member and the collar means. The engagement means may comprise meshing serrated surfaces.

The attachment means may comprise at least one locating member so formed as to locate on a wheel. The or each locating member may comprise a locating portion for engaging a wheel, there being nut and bolt means provided for securing the locating member to the retaining means. The nut and bolt means are preferably so arranged as to pull the locating portion toward the retaining means as the nut and bolt means are tightened, thereby tightening the engagement between the locating portion and the wheel. Preferably the locating portion is a hooked portion. Alternatively, the locating member may be a bolt having a head locatable in an aperture in a wheel.

Embodiments of the present invention will now be described in more detail, by way of example only, and with reference to the accompany drawings, in which:-
Fig. 1 is a general, schematic exploded view of an arrangement according to the invention, with some components shown on an enlarged scale;
Fig. 2 is a front elevation of a locking washer from the arrangement of Fig. 1;
Fig. 3 is a side elevation showing the washer of Fig. 2 installed in the arrangement of Fig. 1;
Fig. 4 is a front view of a ring forming part of the arrangement of Fig. 1;
Fig. 5 is a section through the ring along the line V-V in Fig. 4;
Fig. 6 is a perspective view of a hook bolt for the arrangement of Fig. 1; and
Fig. 7 is a section through an alternative arrangement for mounting the safety arrangement to a vehicle wheel system.

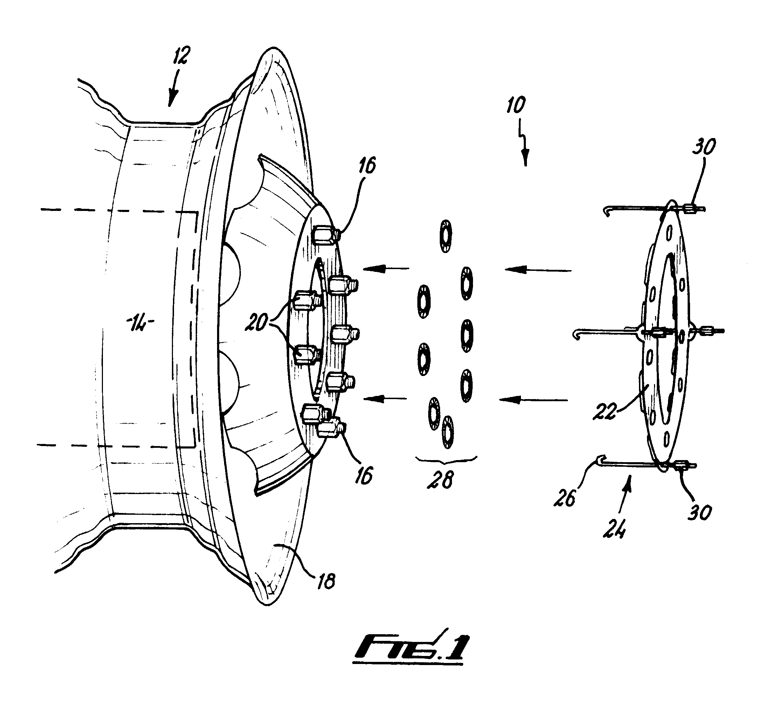

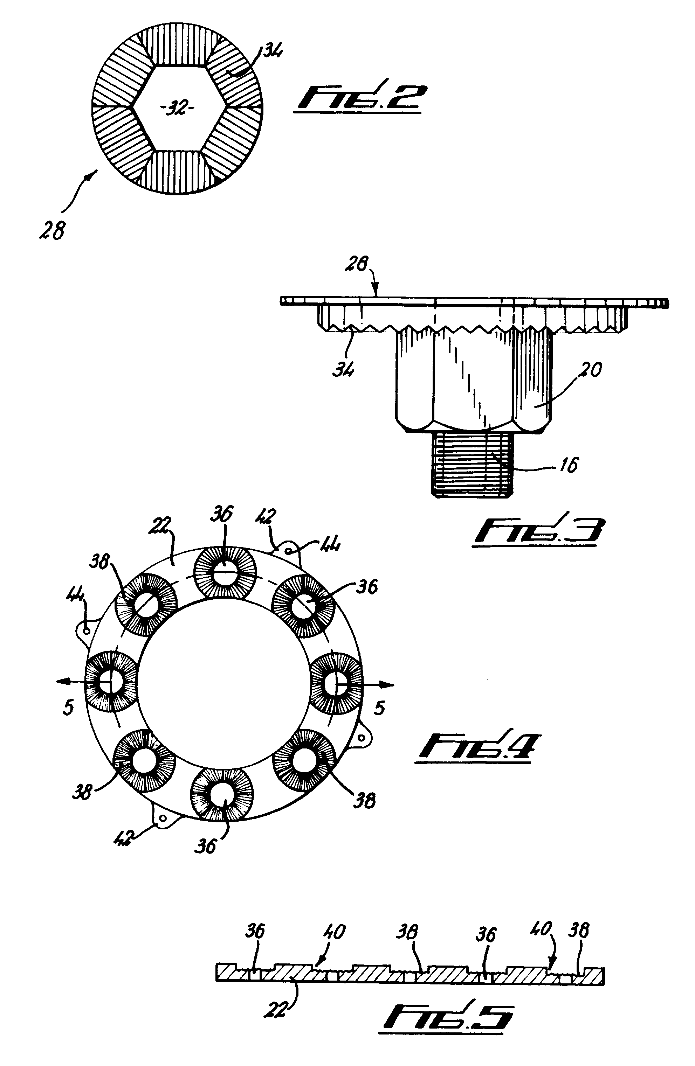

Turning to Fig. 1, the safety arrangement 10 is for use with a conventional vehicle wheel system indicated generally at 12. This comprises a hub indicated at 14, a ring of bolts 16 on the hub 14, a wheel 18 having apertures for location over each bolt 16, and a wheel nut 20 on each bolt 16 and tightened to hold the wheel 18 against the hub 14. According to the invention, the arrangement further comprises a retaining ring 22 and mounting means 24 incorporating hooks 26 to mount the retaining ring 22 to the vehicle wheel system 12. As will be described, the retaining ring 22 is positioned to interfere with rotation of the wheel nuts 20, so as to resist or prevent loosening of the nuts.

In more detail, the arrangement comprises locking washers 28, the retaining ring 22, the hooks 26 and nuts 30. Each locking washer 28 has a central aperture 32 which is the same shape as, and a close fit with one of the wheel nuts 20. Accordingly, when the locking washer 28 is placed over a nut 20 to form a collar around it, the collar 28 mates with the nut 20 to prevent the nut turning relative to the collar 28. The exposed transverse face 34 of each collar 28 is serrated, or knurled, with radially extending grooves, for reasons to be described.

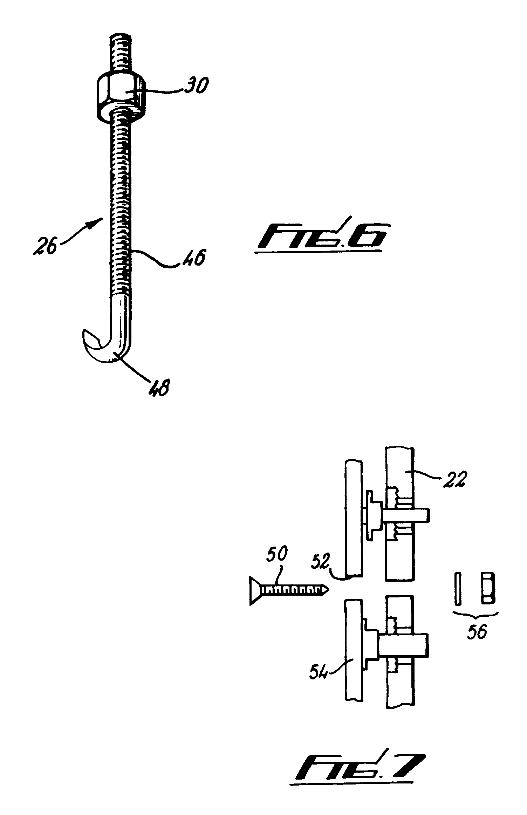

The retaining ring 22 has a series of holes 36 formed around it at appropriate positions to receive the free ends of respective bolts 16. A ring of serration 38 in the form of radially extending grooves or knurls is formed around each hole 36. The serration 38 is so formed as to be meshable with the serration on the faces 34 of the collars 28. The serration 38 may be formed in recesses 40 (Fig. 5).

Several lugs 42 are formed around the outer edge of the ring 22, each lug having an eye 44 for receiving the elongate shank 46 of a hook 26, as can be seen in Fig. 1. The shank 46 is threaded to receive a nut 30 over its straight end, and has a hooked portion 48 at its other end.

The arrangement described above is used in the following manner. After all wheel nuts 20 have been tightened and checked in conventional manner, a collar 28 is placed over each nut 20, with the serrated face 34 exposed. The collars 28 are then covered by the ring 22 which receives a bolt 16 in each hole 36. As the ring 22 is pushed on to the bolts 16, the serrations at 34, 38 mesh to prevent the collars 28 turning relative to the ring 22. The ring 22 is then attached to the wheel 18 by hooking the hooks 26 through appropriate apertures in the wheel 18. (Conventional wheel rims, particularly on commercial vehicles, have holes, apertures, flanges and the like for other purposes, and which can be used for this purpose.) The nuts 30 can then be tightened to pull the ring 22 tightly toward the wheel 18. This has the effect of tightly meshing the serrations, and securely holding the ring 22 relative to the wheel 18, with which it will turn.

In consequence, the ring 22 is securely held relative to the wheel 18, the collars 28 are prevented by the serrations from rotating relative to the ring 22, and hence relative to the wheel 18, and the wheel nuts 20 are prevented from turning relative to the collars 28 and hence cannot turn relative to the wheel 18. This interference with rotation of the nuts is therefore sufficient to ensure they are securely held against loosening.

The nuts 30 can be tightened as tightly as is desired without affecting the performance of the wheel nuts 20 and bolts 16 in securing the wheel 18 to the hub 18. The wheel nuts 20 can be tightened, in the normal way, to the required torque laid down by the manufacturer, and their setting is not thereafter affected by the use of the safety arrangement. It is a simple matter to check visually that the ring 22 is in place on each wheel and it is easier to tighten the relatively small number of nuts 30 than to check and tighten each wheel nut 20. It is envisaged that in addition to providing safety improvements, the arrangement according to the invention would also deter wheel theft.

Many alternatives to the hooked attachment arrangement described above could be devised. Fig. 7 shows an arrangement in which bolts are used to pass through holes 52 in the wheel 54, with nuts and washers 56 being used to secure the ring 22 to the bolts 50. Any other attachment arrangement could be used which attaches the ring 22 adequately securely to the wheel to ensure meshing of the serrations, and hence to ensure that the collars 28 and nuts 20 cannot rotate.

Many various and modifications can be made to the apparatus described above, without departing from the scope of the present invention. In particular, the shapes, sizes and relative sizes of the various components of the arrangement can be modified widely, particularly for use with different wheel sizes and designs, and to provide adequate strength in a variety of different materials.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A safety arrangement for a vehicle wheel system which comprises a hub, at least one bolt on the hub, and a wheel nut engageable with the or each bolt to retain a wheel on the hub, the safety arrangement comprising retaining means, and mounting means operable to mount the retaining means to a vehicle wheel system as aforesaid, to so position the retaining means as to interfere with rotation of the wheel nuts and thereby resist or prevent loosening of the nuts.

2. An arrangement according to claim 1, in which the retaining means comprises a recess which, in use, mates with the or each nut to prevent the nut turning relative to the retaining means.

3. An arrangement according to claims 1 or 2, in which the retaining means comprises a collar which is located, in use, around a nut.

4. An arrangement according to claim 3, in which the arrangement comprises a plurality of collars for respective nuts.

5. An arrangement according to any preceding claim, in which the arrangement comprises an intermediate member, the mounting means being operable to mount the intermediate member at a position fixed relative to the wheel, and there being engagement means associated with the or each nut to prevent turning relative to the intermediate member.

6. An arrangement according to claim 5, in which the engagement means provides engagement between the intermediate member and the collar means.

7. An arrangement according to claims 5 or 6, in which the engagement means comprises meshing serrated surfaces.

8. An arrangement according to any preceding claim, in which the mounting means may comprise at least one locating member so formed as to locate on a wheel.

9. An arrangement according to claim 8, in which the or each locating member comprises a locating portion for engaging a wheel, there being nut and bolt means provided for securing the locating member to the retaining means.

10. An arrangement according to claim 9, in which the nut and bolt means are so arranged as to pull the locating portion toward the retaining means as the nut and bolt means are tightened, thereby tightening the engagement between the locating portion and the wheel.

11. An arrangement according to claims 9 or 10, in which the locating portion is a hooked portion.

12. An arrangement according to claim 8, in which the locating member is a bolt having a head locatable in an aperture in a wheel.

13. A safety arrangement substantially as described above with reference to the accompanying drawings.

14. Any novel subject matter or combination including novel subject matter disclosed herein, whether or not within the scope of or relating to the same invention as any of the preceding claims.
